# EUROPEAN PATENT SPECIFICATION

(11) **EP 0 532 011 B1**
(45) Date of publication and mention of the grant of the patent: **03.04.1996**
(21) Application number: 92115528.9
(22) Date of filing: 10.09.1992
(51) Int. Cl.: F16J 15/32

(54) **Pack seal**
Kassettendichtung
Joint d'étanchéité en cartouche

(30) Priority: 12.09.1991 JP 96860/91
(43) Date of publication of application: 17.03.1993
(73) Proprietor: UCHIYAMA MANUFACTURING CORP., Okayama-shi, Okayama-ken (JP)
(72) Inventor: Nakano, Youji, c/o Uchiyama Manufacturing Corp., Okayama-shi, Okayama-ken (JP)
(74) Representative: Perani, Aurelio

(56) References cited:
- WO-A-87/00290

## Description

### Filed of the Invention

This invention relates to a seal device which is installed between two members rotating relative to each other and which seals an inside part and an outside part of the two members, and more particularly to a pack seal comprising a combination of a plurality of members to which a toothed rotor for use in sensing the revolution number of a shaft is coupled.

### Description of the Prior Art

It is generally known that a shaft is pivotally supported at a housing through a bearing, a pulse generator for use in sensing the revolution number of shaft is comprised of a toothed rotor disposed at the shaft, the revolution number sensor being disposed in the housing; the toothed rotor and the revolution number sensor are spaced apart from a seal device for sealing the bearing and a shaft rotational speed sensing device is then constructed as an independent device.

Referring now to the drawings, a case in which the present invention is applied to a wheel of a vehicle will be described in detail.

In Fig. 5 showing an example of the prior art, a structure for sensing and detecting a rotational speed of a wheel is comprised of a toothed rotor 8 fitted to a rotary shaft 7 to which a wheel hub is fixedly attached, and of a revolution number sensor 10 mounted to an axle case 9.

The bearing 11 shown in the figure is protected against infiltration of moisture or foreign matter by a seal device A independently installed on a side part of the bearing.

However, a mounting structure for the aforesaid shaft rotational speed sensing device requires a dedicated space to accommodate the toothed rotor 8 and the revolution number sensor 10, and results in a complex structure due to the installation of a seal device for bearing or the like.

In addition, it requires a fine grinding finish of a press-fitted part of the shaft in order to ensure accurate sensing of the shaft rotational speed.

WO-A-87/00290 discloses an axle seal and an impulse wheel formed in a unitary arrangement which partly overcomes the above mentioned disadvantages.

The axle seal in form of a metallic outer ring having a U shaped cross section, is steadily mounted on a rotating hub and provided with an inner resilient sealing ring, housed in the metallic ring and forced onto a wear ring steady with a journal.

The impulse wheel is fixed on a side surface of the metallic outer ring and its axial centering on the hub axis is established by the mounting of the outer ring, in a cavity of the hub.

While providing for a relatively easy mounting of the unitary arrangement on the hub and reducing the installation space requirements, the performance of the impulse wheel is not improved and the wheel is exposed to dust accumulation and to corrosion induced by accumulated noxious substances.

Further the resilient sealing ring needs stiffening elements and results in a combined and relatively expensive structure.

### SUMMARY OF THE INVENTION

It is an object of the present invention to provide a pack seal capable of eliminating the aforesaid disadvantages and defects, both reducing the installation space requirements for the shaft rotational speed sensing device and improving the performance of the shaft rotational speed sensing arrangement.

The object of the invention is attained by the pack seal of claim 1.

In addition, the present invention is further characterized in that the aforesaid sealing member having a substantially L-shaped cross section is formed of non-magnetic material and the plate is formed of magnetic material.

The present invention has the following superior effects with the aforesaid construction.

That is, the pack seal of the present invention is made such that a plate having some recesses of a specified pitch cut at its outer circumferential edge is integrally connected to and disposed at a side surface along a diametrical direction of one of the outer ring seal member and the inner ring seal member having a substantial L-shaped section, and the other seal member is assembled to said one seal member, thereby the revolution number sensor in its normal position will produce a sealing action as well as a revolution number sensing action as expected.

The aforesaid features, other features and objects of the present invention will become further apparent in relation to the preferred embodiments of the present invention described in conjunction with the accompanying drawings.

### BRIEF DESCRIPTION OF THE DRAWINGS

Fig. 1 is a sectional view showing a preferred embodiment of the pack seal of the present invention;
Fig. 2 is partial top plan view of Fig. 1;
Fig. 3 is a sectional view showing another preferred embodiment of the pack seal of the present invention;
Fig. 4 is a sectional view showing still another preferred embodiment of the pack seal of the present invention;
Fig. 5 is a sectional view showing a structure of the prior art.

### DESCRIPTION OF THE PREFERRED EMBODIMENTS

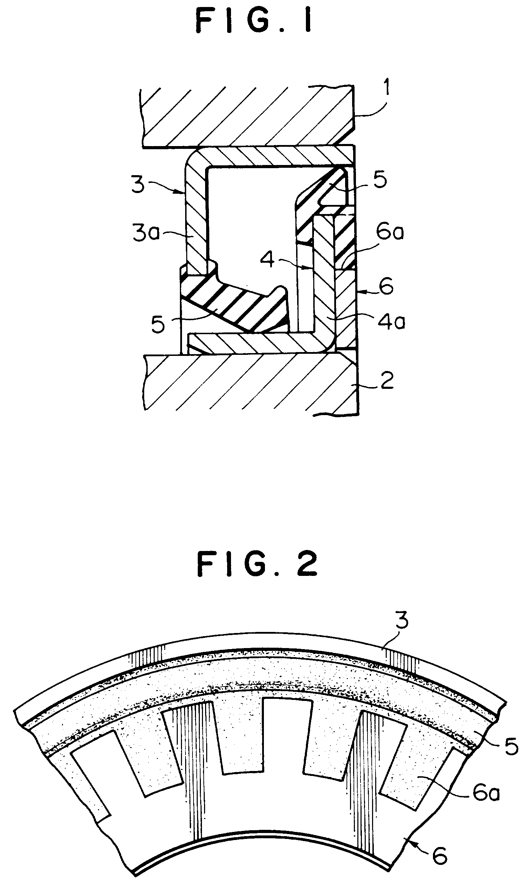

In Fig. 1, a preferred embodiment of the pack seal is shown in its sectional shape.

The pack seal is constructed such that an outer ring seal member 3 and an inner ring seal member 4 having a substantial L-shaped cross section and intended for attachment to an outer ring member 1 and an inner ring member 2 rotating relative to each another are combined together, seal lips 5 of resilient material of a synthetic rubber or a synthetic resin or the like are disposed at both seal members 3 and 4 so as to seal an inside part and an outside part of the outer ring member 1 and the inner ring member 2, and an annular plate 6 having some recesses 6a with a specified pitch cut at an outer circumferential edge thereof as shown in Fig. 2 is integrally disposed at an outer side surface 4a in a diametrical direction of one of the seal members 3 and 4 which have a substantially L-shaped cross section (in the figure the plate 6 is integral to the seal member 4).

The plate 6 having some recesses 6a cut in it, constitutes a toothed rotor of the rotational speed sensing device and is fixedly attached integrally and directly to a side surface, 3a or 4a, in a diametrical direction of the seal members 3 and 4, resulting in that high rigidity may easily be attained therefor and material quality and thickness of each of the members can be reduced to get light weight and a low price.

Resilient material for the seal lips 5 is filled and formed in the recesses 6a of the plate 6.

In this case, since the plate 6 is integrally coupled to the seal member 3 or 4, the resilient material may be easily filled and formed in the recesses 6a in the event that the plate locates near the seal lips (it may also be applicable in the case that it is not near the seal lips), whereby the resilient material filling the recesses 6a forms with the toothed plate 6 a uniform cross section ring and prevent dust etc., from building up in the recesses. Thus the pulse generating function is substantially improved.

Either seal member 3 or 4, having a substantial L-shaped section, is preferably formed of non-magnetic material and the plate 6 is made of magnetic material. With such an arrangement, it is possible to detect a pulse signal for use in sensing the clear number of rotation unaffected by magnetism generated by other devices.

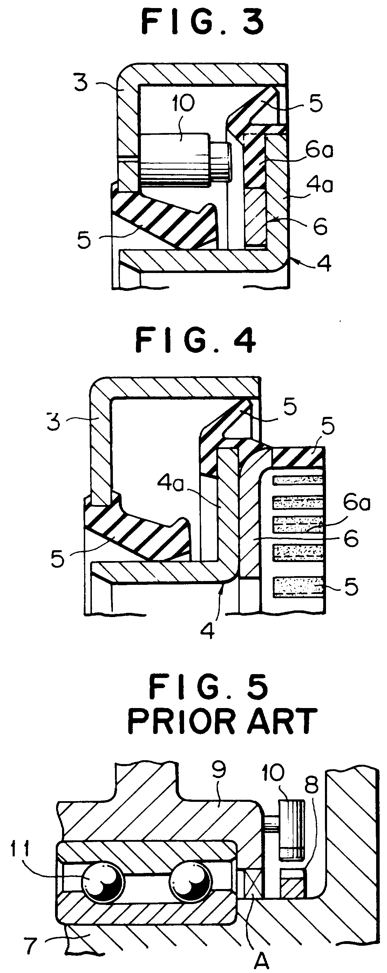

In a combined structure of the pack seal of the present invention, it is possible to provide a structure having a function to detect the number of revolution outward of the pack seal shown in Fig. 1. In another structure of unitary construction as shown in Fig. 3 the plate 6 is disposed within the pack seal and the revolution number sensor 10 is attached to the outer ring seal member 3, mounted to the outer ring member 1, and is also disposed within the pack seal to sense the number of revolutions. A further structure in which the part of the plate 6 having the recesses 6a formed therein is bent or folded axially is shown in Fig. 4, and the revolution number sensor (not shown) is oppositely disposed in a diametrical direction.

As described above, the present invention has many advantages in terms of space requirements, installing operation easiness and precision due to the fact that the plate 6 acting as the toothed rotor for use in sensing a rotational speed of the shaft is directly and integrally assembled with the pack seal; further, the present invention can eliminate troublesome operations such as a grinding or the like at the fixing part. In addition, the pack seal may easily be fixed in the predetermined position, in a similar manner to that of the normal seal member and thus the installed pack seal can guide the plate 6 to the proper position and provide a high accuracy of the fixing angle (clearly the plate 6 must be exactly parallel to any diametrical direction of the ring members).

It is of course apparent that the toothed rotor, unlike the pack seal in the prior art, has been eliminated and so it may have high effectiveness in its light weight application.

In addition, since the toothed rotor of the plate 6 is filled with the resilient-material of the seal lips 5 its impulse generating function is substantially improved due to the fact that dust, moisture etc. are prevented from building up in the recess 6a.

At the same time the toothed active portion of the plate 6 is protected against corrosion.

Additionally, the plate 6 and the seal member 3 or 4 can be formed integrally and concurrently with the seal lips 5, so that its productivity can be substantially improved.

## Claims

1. A pack seal comprising an outer ring seal member (3) and an inner ring seal member (4) respectively attached to an outer ring member (1) and an inner ring member (2) rotating relative to each other, a seal lip (5) of resilient material disposed in at least one of said ring seal members (3,4) and a metal plate (6), having recesses of a specified pitch cut therein, integrally disposed at a diametrically positioned side surface of one of said ring seal members (3,4), characterised in that:
said ring seal members (3,4) have a substantially L-shaped cross section and said seal lip (5) of resilient material comprises resilient material filling said recesses (6a) of said metal plate (6).

2. A pack seal according to claim 1 in which said metal plate (6) is integrally disposed on a side surface on one (4) of said seal members (3,4) and contained within said pack seal, said pack seal further comprising a revolution mumber sensor (10), contained in said pack seal and facing said metal plate (6).

3. A pack seal according to claim 1 or 2 in which said seal members (3,4) are formed of non magnetic material and said plate (6) is formed of magnetic material.

## Patentansprüche

1. Kassettendichtung mit einer äußeren Ringdichtung (3) und einer inneren Ringdichtung (4), die an einem Außenring (1) bzw. einem Innenring (2) befestigt sind, die relativ zueinander verdrehbar sind, einer Dichtungslippe (5) aus elastischem Material, die zumindest in einer der Ringdichtungen (3, 4) angeordnet ist, und einer Metallplatte (6), die darin Ausnehmungen einer bestimmten Teilung besitzt, die eine Einheit bildend an einer diametral positionierten Seitenoberfläche einer der Ringdichtungen (3, 4) angeordnet sind, dadurch gekennzeichnet, daß
die Ringdichtungen (3, 4) einen im wesentlichen L-förmigen Querschnitt aufweisen und die Dichtungslippe (5) aus elastischem Material elastisches Material enthält, welches die Ausnehmungen (6a) der Metallplatte (6) ausfüllt.

2. Kassettendichtung nach Anspruch 1, bei der die Metallplatte (6) eine Einheit bildend auf einer Seitenoberfläche auf einer (4) der Dichtungen (3, 4) angeordnet ist und innerhalb der Kassettendichtung aufgenommen wird, wobei die Kassettendichtung außerdem einen Drehzahlsensor (10) enthält, der in der Kassettendichtung enthalten ist und der Metallplatte (6) gegenüberliegt.

3. Kassettendichtung nach Anspruch 1 oder 2, bei der die Dichtungen (3, 4) aus nichtmagnetischem Material bestehen und die Metallplatte (6) aus magnetischem Material besteht.

## Revendications

1. Joint d'étanchéité en cartouche comprenant un élément de joint d'étanchéité de bague externe (3) et un élément de joint d'étanchéité de bague interne (4) respectivement fixés à un élément de bague externe (1) et à un élément de bague interne (2) tournant l'un par rapport à l'autre, une lèvre de joint d'étanchéité (5) en matériau élastique disposée en au moins l'un desdits éléments de joint d'étanchéité de bague (3, 4) et une plaque métallique (6), ayant des évidements à encoche d'écartement spécifié à l'intérieur, disposée d'un seul tenant à une surface latérale diamétralement positionnée de l'un desdits éléments de joint d'étanchéité de bague (3, 4), caractérisé en ce que :
lesdits éléments de joint d'étanchéité de bague (3, 4) ont une section transversale de forme sensiblement en L et ladite lèvre de joint d'étanchéité (5) en matériau élastique comprend un matériau élastique remplissant lesdits évidements (6a) de ladite plaque métallique (6).

2. Joint d'étanchéité en cartouche selon la revendication 1, dans lequel ladite plaque métallique (6) est disposée d'un seul tenant sur une surface latérale de l'un (4) desdits éléments de joint d'étanchéité (3, 4) et contenue à l'intérieur dudit joint d'étanchéité en cartouche, ledit joint d'étanchéité en cartouche comprenant en outre un capteur de nombre de tours (10) contenu dans ledit joint d'étanchéité en cartouche et faisant face à ladite plaque métallique (6).

3. Joint d'étanchéité en cartouche selon la revendication 1 ou 2, dans lequel lesdits éléments de joint d'étanchéité (3, 4) sont formés en matériau non magnétique et ladite plaque (6) est formée en matériau magnétique.
